# EUROPÄISCHE PATENTANMELDUNG

(11) **EP 3 964 321 A1**
(43) Veröffentlichungstag der Anmeldung: **09.03.2022**
(21) Anmeldenummer: 21189472.0
(22) Anmeldetag: 03.08.2021
(51) Int. Cl.: B23K 26/08, B23K 26/38, B23K 26/70, B23K 37/04, B23K 37/047, B23K 37/053, B23Q 1/48, B23Q 1/54, B23Q 7/04, B23K 101/06, B23K 101/28

(54) **VORRICHTUNG UND VERFAHREN ZUR HERSTELLUNG VON WERKSTÜCKEN**

(30) Priorität: 21.08.2020 DE 102020121951
(71) Anmelder: RSA cutting technologies GmbH, 58239 Schwerte (DE)
(72) Erfinder: Berg, Thomas, 44149 Dortmund (DE); Feldhoff, Stephan, 51709 Marienheide (DE); Pankratz, Viktor, 58675 Hemer (DE)
(74) Vertreter: Ostriga Sonnet Wirths & Vorwerk

(57) **Zusammenfassung**

Offenbart ist eine Vorrichtung zur Herstellung von Werkstücken, nachfolgend Fixlängen genannt, aus langen Profilen, mit einer Zuführeinrichtung und mindestens einem Drehfutter sowie wenigstens einem Laserwerkzeug.

Ziel ist es eine neue Vorrichtung zur Herstellung von Werkstücken zu schaffen, welche wesentlich kürzer und leichter ist und darüber hinaus eine größere Kapazität aufweist.

Die Lösung besteht darin, dass die Zuführeinrichtung in Bewegungsrichtung vor dem Laserwerkzeug mindestens zwei Hohlwellendrehfutter aufweist, deren dauerhafte Drehbewegungen synchronisiert sind.

## Beschreibung

Die Erfindung betrifft zunächst eine Vorrichtung zur Herstellung von Werkstücken, nachfolgend Fixlängen genannt, aus langen Profilen, mit einer Zuführeinrichtung und mindestens einem Drehfutter sowie wenigstens einem Laserwerkzeug,

Aus dem druckschriftlich nicht nachweisbaren Stand der Technik ist eine derartige Vorrichtung der Firma Trumpf allgemein bekannt. Mit dieser Vorrichtung werden aus Ausgangsrohren Werkstücke erstellt, wobei die Zuführung der Rohre über ein Drehfutter erfolgt. Das Drehfutter erfasst das jeweils zu lasernde Rohr am vom Laser abgewandten Ende und schiebt nach und nach das Rohr in den Bearbeitungsbereich des Rohrlasers nach.

Eine derartige Vorrichtung nach dem Stand der Technik hat den Nachteil, dass bei der Bearbeitung von sehr langen Rohrlängen die Zuführeinrichtung für einen derartigen Rohrlaser sehr lang und auch schwer sein muss, wodurch aufgrund des großen Bauraums der Vorrichtung auch ein großer Platzbedarf besteht.

Hinzu kommt, dass ein Wechsel des Rohres - insbesondere bei langen Rohren - relativ zeitaufwendig ist, wodurch die Kapazität des Rohrlasers sinkt.

Die Aufgabe der Erfindung besteht deshalb darin, eine neue Vorrichtung zur Herstellung von Werkstücken zu schaffen, welche wesentlich kürzer und leichter ist und darüber hinaus eine größere Kapazität aufweist.

Die Lösung dieser Aufgabe ergibt sich aus einer Vorrichtung zum Herstellen von Werkstücken gemäß dem nachfolgenden Anspruch 1:
Vorrichtung zur Herstellung von Werkstücken, nachfolgend Fixlängen genannt, aus langen Profilen, mit einer Zuführeinrichtung und mindestens einem Drehfutter sowie wenigstens einem Laserwerkzeug, dadurch gekennzeichnet, dass Zuführeinrichtung in Bewegungsrichtung vor dem Laserwerkzeug mindestens zwei Hohlwellendrehfutter aufweist, deren dauerhafte Drehbewegungen synchronisiert sind.

Durch den erfindungsgemäßen Einsatz von zwei Hohlwellendrehfutter, deren dauerhafte Drehbewegung synchronisiert sind, kann die erfindungsgemäße Zuführeinrichtung viel kontinuierlicher und ohne größere zeitliche Lücken dem Laserwerkzeug Profile zu führen, wodurch sich die Kapazität der Vorrichtung deutlich vergrößert.

Dieser Vorteil ergibt sich einerseits durch den Einsatz von zwei Hohlwellendrehfutter und andererseits durch die Tatsache, dass die Hohlwellendrehfutter zu öffnen sind und somit lediglich ein Profil geringfügig überfahren muss und nach dem Schließen des Hohlwellenfutters bereits den Transport des Profils in Richtung des Laserwerkzeugs durchführen kann. Damit unterbleibt die relativ zeitaufwendige Fahrt eines Drehfutters zu einen vom Laserwerkzeug wegweisenden Endbereichs eines Profils. Im Ergebnis verringern sich die Profilwechselzeiten deutlich.

Bei einer vorteilhaften Ausführungsform der Erfindung weist die Zuführeinrichtung bei größeren Fixlängen ein zusätzliches Hohlwellendrehfutter in Bewegungsrichtung nach dem Laserwerkzeug auf.

Durch den zusätzlichen Einsatz eines dritten Hohlwellendrehfutters nach dem Laserwerkzeug können die Produktionslücken noch weiter verringert werden, da insbesondere bei relativ kurzen Reststücken der Profile die beiden in Bewegungsrichtung vor und nach dem Laserwerkzeug angeordneten Hohlwellendrehfutter zusammenwirken können und während dieses Zusammenwirkens das vom Laserwerkzeug am weitesten entfernte Hohlwellendrehfutter gleichzeitig bereits ein neues Profil überfahren und dann in Richtung des Laserwerkzeugs transportiert werden kann. Auch wird der Reststückanfall minimiert.

Die Erfindung betrifft des Weiteren ein Verfahren zur Herstellung von Fixlängen aus langen Profilen mit einer Zuführeinrichtung, die Bewegungsrichtung vor dem Laserwerkzeug zwei Hohlwellendrehfutter aufweist, deren dauerhafte Drehbewegung synchronisiert sind.

Ausgehend von dem oben genannten Stand der Technik sowie der ebenfalls oben aufgeführten Aufgabe ergibt sich die Lösung dieser Aufgabe aus dem Verfahren gemäß dem nachfolgenden Anspruch 3:
Verfahren zur Herstellung von Fixlängen aus langen Profilen mit einer Zuführeinrichtung, die in Bewegungsrichtung vor dem Laserwerkzeug zwei Hohlwellendrehfutter aufweist, deren dauerhafte Drehbewegungen synchronisiert sind, gekennzeichnet durch folgende Verfahrensschritte:
a. Das geöffnete Hohlwellendrehfutter 1 bewegt sich entgegen der Bewegungsrichtung zu einem langen Profil, überfährt dieses lediglich endseitig und schließt.
b. Das geschlossene Hohlwellendrehfutter 1 bewegt das Profil durch das geöffnete Hohlwellendrehfutter 2 hindurch bis unter das Laserwerkzeug
c. Hohlwellendrehfutter 2 schließt und ein erster Laserschnitt zur Erstellung einer Fixlänge beginnt
d. Hohlwellendrehfutter 1 öffnet sich und überfährt entgegen der Bewegungsrichtung weiter das Profil
e. Transport des Profils um eine Fixlänge Richtung Laserwerkzeug bei geöffneten Hohlwellendrehfutter 2 und geschlossenem Hohlwellendrehfutter 1
f. Durchführung eines weiteren Schnittes zur Herstellung einer Fixlänge
g. Mehrfache Wiederholung der Verfahrensschritte d. bis f. bis das die Restlänge des Werkstücks kleiner ist als die Fixlänge
h. Hohlwellendrehfutter 1 bewegt sich entgegen der Bewegungsrichtung zu einem weiteren langen Profil, überfährt dieses endseitig und schließt.

Das erfindungsgemäße Verfahren zur Herstellung von Fixlängen aus langen Profilen weist den wesentlichen Vorteil auf, dass die Zuführeinrichtung wesentlich kontinuierlicher und mit geringeren Unterbrechungen dem Laserwerkzeug aufgrund des Zusammenwirkens zweier Hohlwellendrehfutter Profile zuführen kann, so dass das Laserwerkzeug weniger Leerzeiten und damit eine wesentlich größere Kapazität hat.

Letztlich betrifft die Erfindung auch ein Verfahren zur Herstellung von Fixlängen aus langen Profilen mit einer Zuführeinrichtung, die in Bewegungsrichtung vor dem Laserwerkzeug mindestens zwei und hinter dem Laserwerkzeug ein Hohldrehfutter aufweist, deren dauerhafte Drehbewegung synchronisiert sind.

Ebenfalls ausgehend von dem oben genannten Stand der Technik sowie der gleichfalls dargelegten Aufgabe ergibt sich die Lösung aus dem Verfahren gemäß dem nachfolgenden Anspruch 4:
Verfahren zur Herstellung von Fixlängen aus langen Profilen mit einer Zuführeinrichtung, die in Bewegungsrichtung vor dem Laserwerkzeug mindestens zwei und hinter dem Laserwerkzeug ein Hohlwellendrehfutter aufweist, deren dauerhaften Drehbewegungen synchronisiert sind, gekennzeichnet durch folgende Verfahrensschritte:
Das erfindungsgemäße Verfahren hat den wesentlichen Vorteil einer effektiveren und mit geringeren Pausen versehenen Zuführung von Profilen zum Laserwerkzeug, insbesondere wenn die Fixlängen relativ groß sind. Dadurch erhöht sich bei der Herstellung von größeren Fixlängen deutlich die Kapazität des Laserwerkzeugs.

Weitere Vorteile der Erfindung ergeben sich aus der nachfolgenden Beschreibung eines Ausführungsbeispiels. Es zeigen:
- Figur 1:: Schematische Draufsicht auf eine Vorrichtung zur Herstellung von Werkstücken,
- Figur 2:: Seitenansicht einer Vorrichtung zur Herstellung von Werkstücken gemäß Figur 1,
- Figuren 3-18:: Darstellung diverser Verfahrensschritte eines Verfahrens/Vorrichtung zur Herstellung von Werkstücken in Seitenansicht.

In den Zeichnungen ist eine Vorrichtung zur Herstellung von Werkstücken aus langen Profilen mit wenigstens einem Laserwerkzeug insgesamt mit der Bezugsziffer 10 bezeichnet.

Eine derartige Vorrichtung 10 weist ein Profillager 11 für zahlreiche Profile 12 auf, welches über eine Schrägförderrampe 13 mit einer Positioniereinrichtung 14 verbunden ist. Die Positioniereinrichtung 14 dient zur exakten Anordnung jeweils eines Profils 12 in einer Mittelachse a der Vorrichtung 10.

Der Positioniereinrichtung 14 ist in Bewegungsrichtung x eine Zuführeinrichtung 15 vorgeschaltet die teilweise in Bewegungsrichtung x vor und hinter einer Laserschneideinrichtung 16 mit einem Laserwerkzeug 17 angeordnet ist.

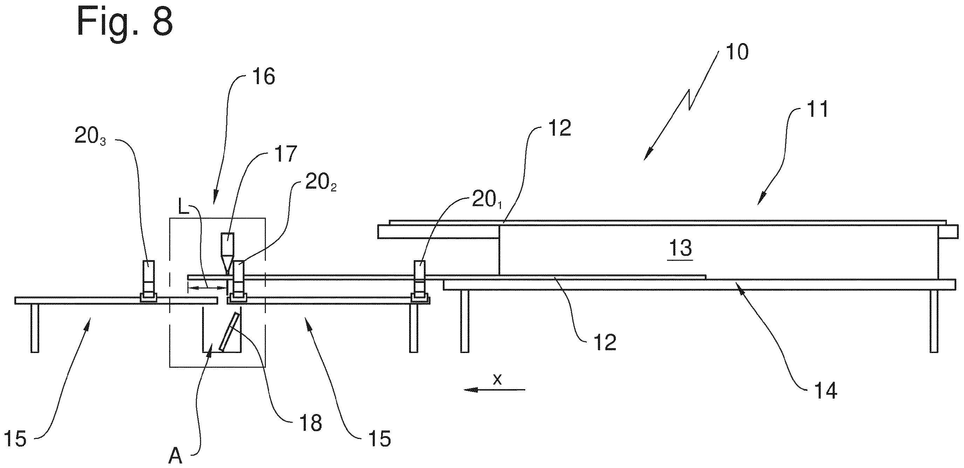

In der Laserschneideinrichtung 16 werden nacheinander eine große Anzahl von sogenannten Fixlängen 18 (siehe Figur 8 ff.) mit einheitlicher Länge I und Ausgestaltung mittels des Laserwerkzeuges 17 erstellt.

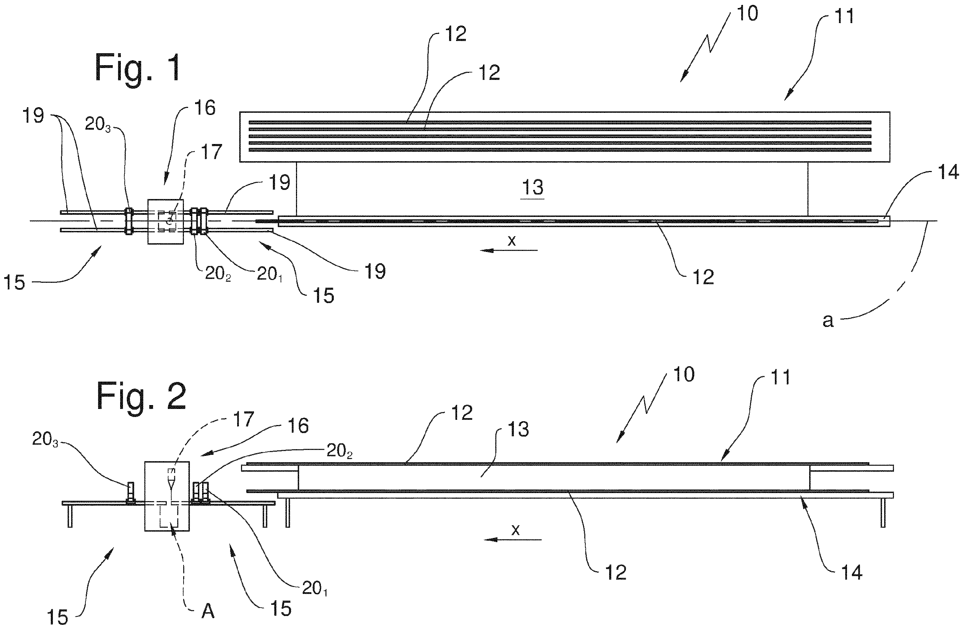

In den Verfahrensskizzen 1 ― 19 ist darüber hinaus zu erkennen, dass in der Laserschneideinrichtung unterhalb des Laserwerkzeug 17 ein Aufnahmebehälter A (siehe Figur 2 ff.) für die Fixlängen 18 vorhanden ist.

Selbstverständlich ist auch ein kontinuierlicher Abtransport der Fixlänge zum Beispiel durch einen Bandanleger möglich.

Die Zuführeinrichtung 15 wird jeweils aus zwei beabstandeten schienenartigen Führungsbauteilen 19 gebildet, auf denen in Bewegungsrichtung x bewegliche Hohlwellendrehfutter 20₁, 20₂, 20₃ angeordnet sind, welche geöffnet und geschlossen werden können.

Wie aus den Eingangsfiguren 1 und 2 zu erkennen sind zwei Hohlwellendrehfutter 20₁ und 20₂ in Bewegungsrichtung x vor dem Laserwerkzeug 17 und das Hohlwellendrehfutter 20₃ hinter dem Laserwerkzeug 17 angeordnet.

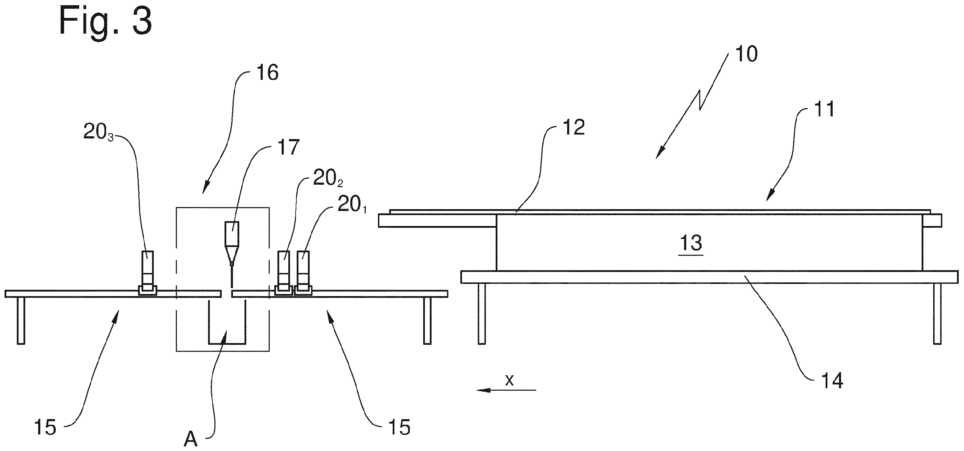

In den Figuren 3 ― 19 sind die einzelnen Verfahrensschritte des erfindungsgemäßen Verfahren dargestellt.

Die Figur 3 stellt grundsätzlich eine vergrößerte Darstellung der Figur 2 dar, wobei noch kein Profil 12 in der Positioniereinrichtung 14 angeordnet ist.

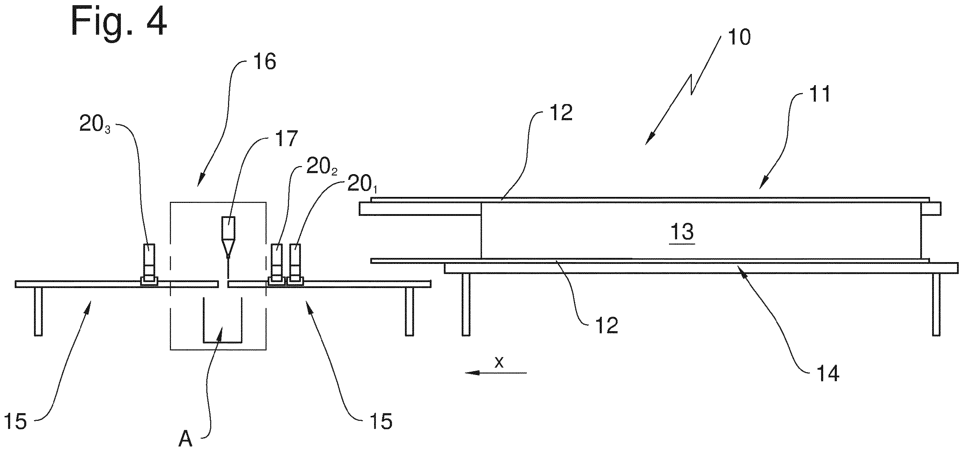

Im Unterschied dazu zeigt die Figur 4, dass mittlerweile aus dem Profillager 11 über die Förderrampe 13 ein Profil 12 in die Positioniereinrichtung 14 gefördert worden ist. Während sich die Hohlwellendrehfutter 20₁, 20₂ und 20₃ noch in der Ausgangsstellung befinden.

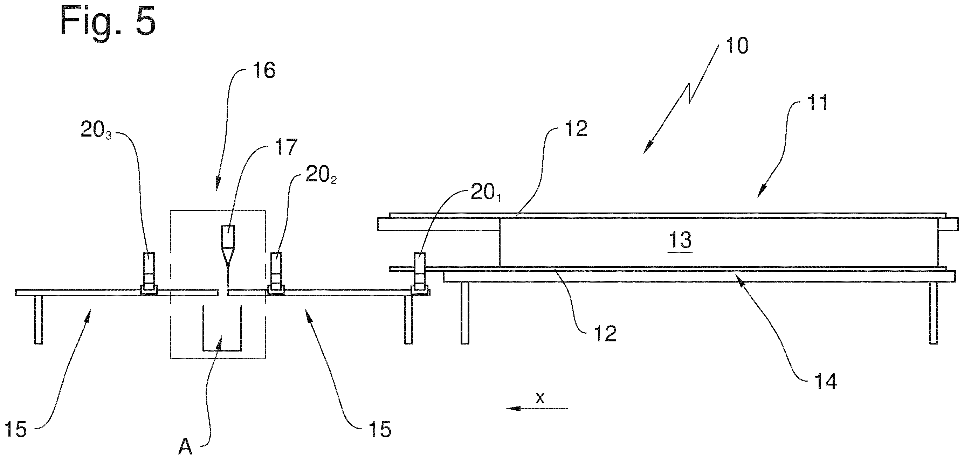

Im Vergleich der Figuren 4 und 5 ist zu erkennen, dass sich das Hohlwellendrehfutter 20₁ entgegen der Bewegungsrichtung x in Richtung des Profils 12 bewegt hat, wobei es dieses im geöffneten Zustand überfahren hat.

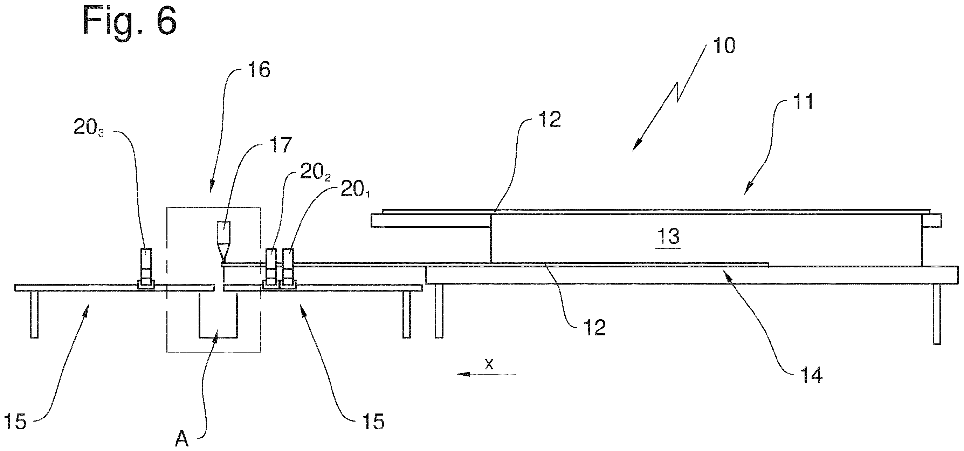

Nach dem Schließen des Hohlwellendrehfutters 20₁ wird das Profil 12 auf nicht dargestellte Weise in eine kontinuierliche Drehbewegung versetzt. Anschließend bewegt sich das Hohlwellendrehfutter 20₁ in Bewegungsrichtung x und schiebt das Profil 12 durch das geöffnete Hohlwellendrehfutter 20₂ bis unter das Laserwerkzeug 17. Danach schließt auch wieder das Hohlwellendrehfutter 20₂ und das Profil 12 wird nun durch beide Hohlwellendrehfutter 20₁ und 20₂ synchron in einer Drehbewegung gehalten (siehe Figur 6).

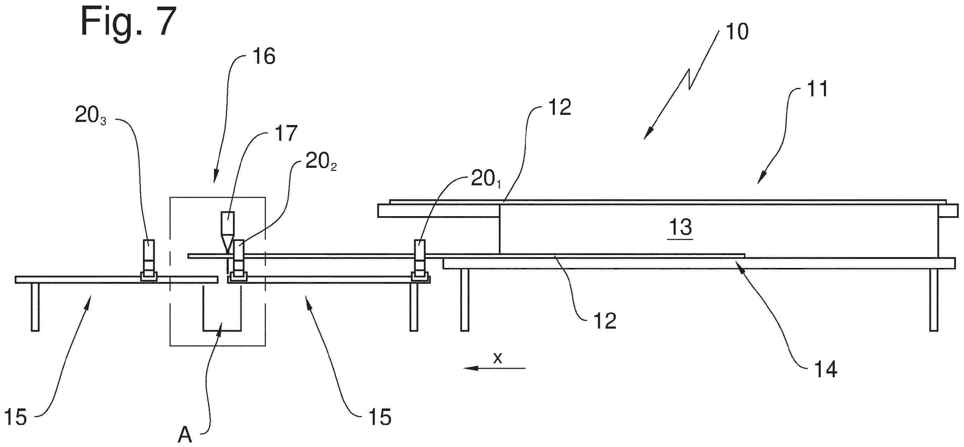

In nicht dargestellter Weise wird ausgehend von der Darstellung gemäß Figur 6 nun ein Kappschnitt vom Laserwerkzeug 17 ausgeführt, wobei dann zunächst durch das geschlossene Hohlwellendrehfutter 20₂ das Profil 12 um die in der Maschinensteuerung festgelegte Länge I der Fixlänge 18 in Bewegungsrichtung x vorgeschoben wird (siehe Figur 7).

Parallel dazu öffnet das Hohlwellendrehfutter 20₁ und bewegt sich entgegen der Bewegungsrichtung x über das Profil 12 hinweg. Wenn das Hohlwellendrehfutter 20₁ die gewünschte Position erreicht hat, schließt es wieder und treibt nun wieder gemeinsam mit dem Hohlwellenfutter 20₂ das Profil 12 an. Diese Situation ist in der Figur 7 dargestellt, wobei nun das Laserwerkzeug 17 vom Profil 12 die festgelegt Fixlänge 18 abtrennen kann, die dann in der Figur 8 im Transportbehälter A bereits zu sehen ist.

Zwischen den Darstellungen der Figuren 7 und 8 ist bereits durch die Hohlwellendrehfutter 20₁ und 20₂ das Profil 12 um die Länge I der Fixlänge 18 in Bewegungsrichtung x vorgeschoben worden, so dass das Laserwerkzeug 17 wiederum eine Fixlänge 18 abtrennen kann.

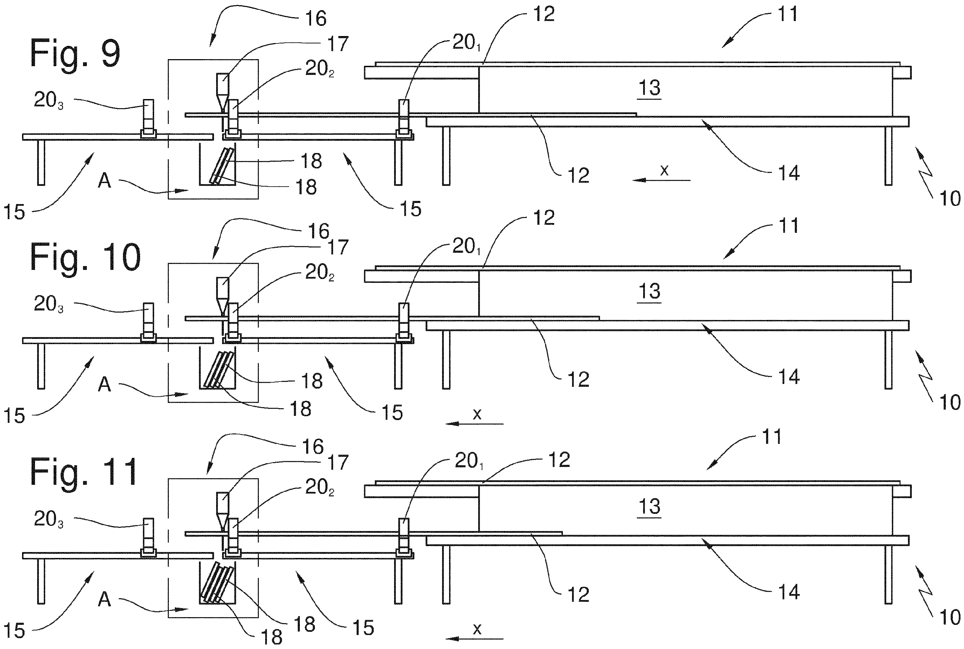

Dieser Vorgang wiederholt sich - wie in den Figuren 9 bis 13 dargestellt - vielfach, wobei sich logischerweise die Restlänge des Profils 12 immer weiter verkürzt.

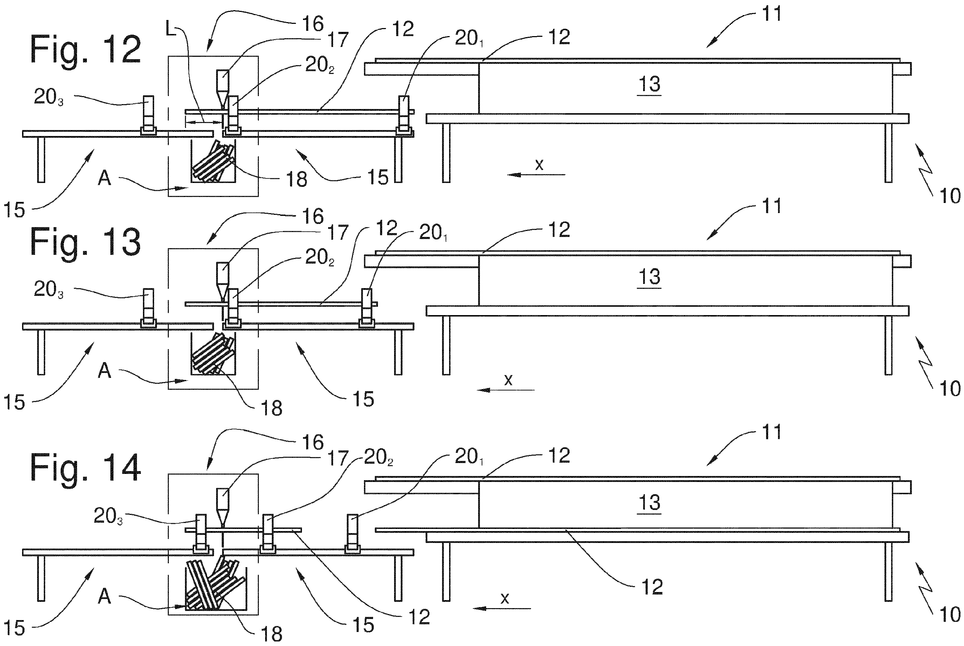

Wichtig ist die Entwicklung zwischen den Verfahrensschritten gemäß Figuren 13 und 14.

Ausgehend von der Figur 13 öffnet nämlich das Hohlwellendrehfutter 20₂ wobei die Restlänge des Profils 12 durch das geschlossene Hohlwellendrehfutter 20₁ soweit in Bewegungsrichtung x durch die Laserschneideinrichtung 16 geschoben wird, dass das Profil 12 in das Hohlwellendrehfutter 20₃ eingreift (siehe Figur 14).

Beim Vorschub des Profils 12 ist es wichtig, dass die Länge des in Bewegungsrichtung x vor dem Laserwerkzeug 17 angeordneten Profilabschnitts 12 der Fixlänge 18 entspricht.

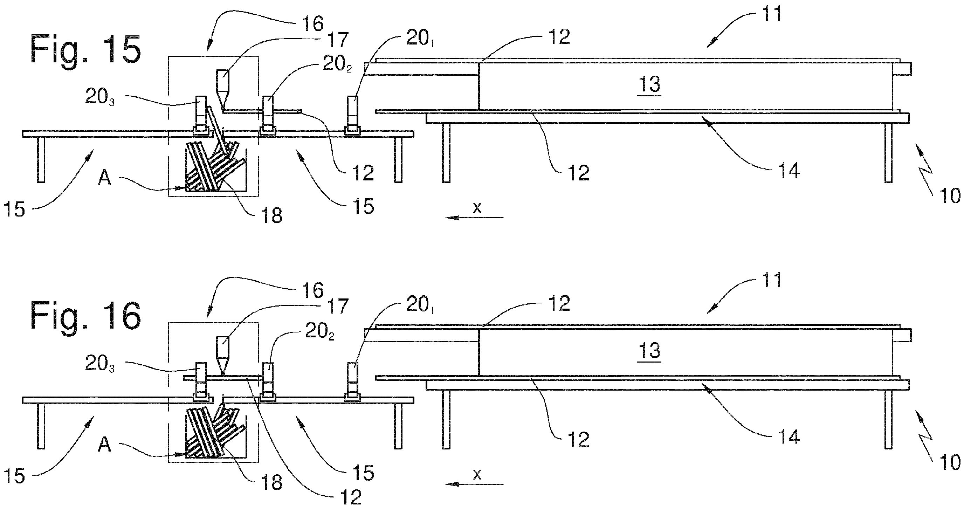

In der Situation der Figur 14 ist es nun möglich, dass das Laserwerkzeug 17 aus dem Profil 12 wiederum eine Fixlänge 18 abtrennt. Die Stellung der Vorrichtung 10 ist in der Figur 15 schematisch dargestellt.

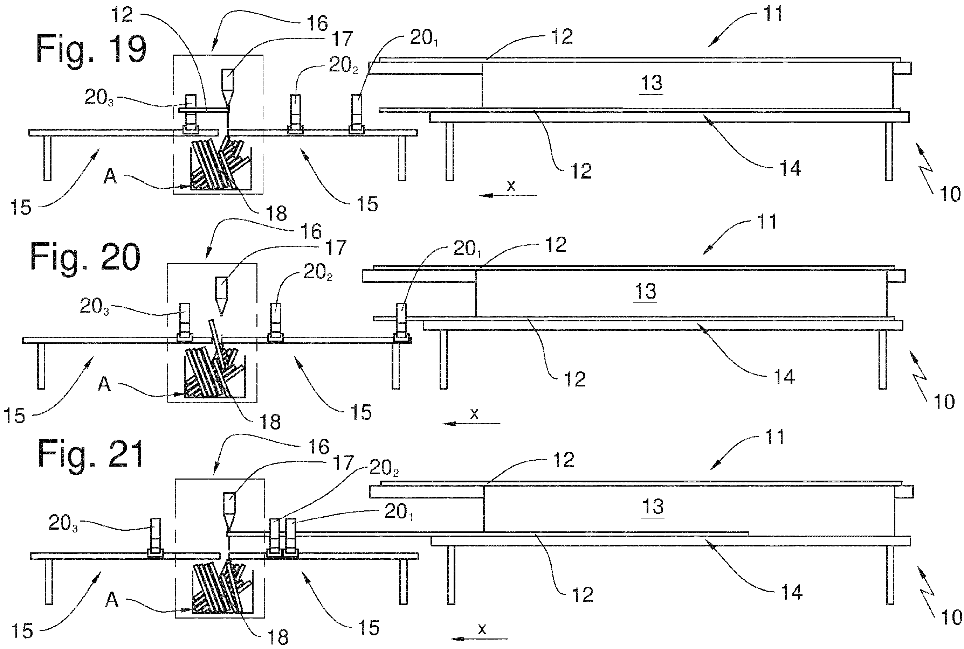

Das Wesentliche ist, das parallel zu den dargelegten Verfahrensschritten nun das für den Lasertrennvorgang nicht mehr notwendige Hohlwellendrehfutter 20₁ bereits wieder geöffnet hat und in der Lage ist - parallel zu der weiteren Verwertung des Reststücks des Profils 12 sich mit dem Transport eines neuen Profils 12 zu beschäftigen. Dies gilt bereits für die in den Figuren 14 - 19 dargelegten Verfahrensschritte, wird jedoch erst in der Figur 20 deutlich.

Aus der Figur 16 ist zu erkennen, dass das Reststück des Profils 12 nun mittels des Hohlwellendrehfutters 20₂ soweit in Bewegungsrichtung x transportiert worden ist, dass das Profil 12 das geöffnete Hohlwellendrehfutter 20₃ durchgreift und in Bewegungsrichtung x vor dem Laser 17 wiederum eine Fixlänge 18 ansteht.

Im nächsten Schritt hat dann das Hohlwellenfutter 20₃ sich geschlossen und das zwischenzeitig bis zum Laserwerkzeug 17 vorgefahrene Hohlwellendrehfutter 20₂ öffnet wieder und fährt in die Position gemäß Figur 16 zurück.

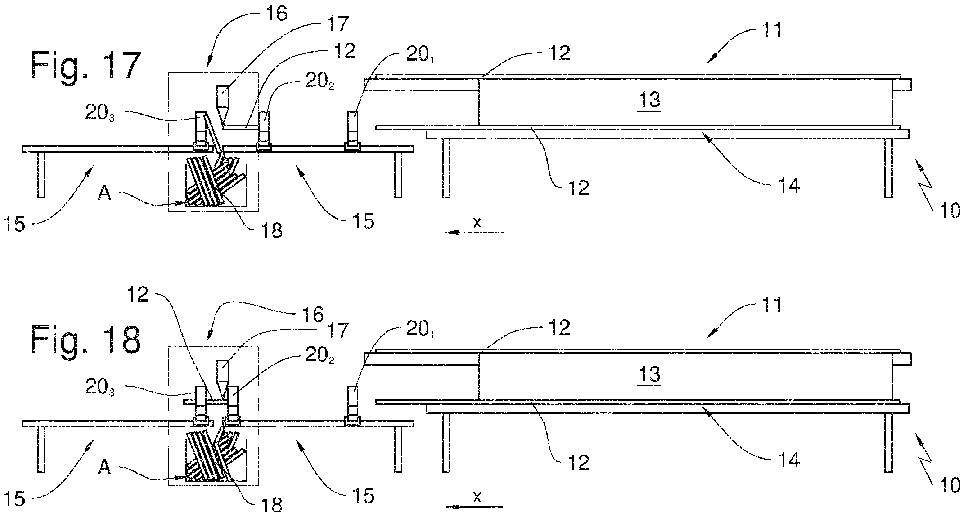

In der Figur 17 ist dargestellt, dass nun der nächste Schnitt des Laserwerkzeuges 17 stattgefunden hat und eine Fixlänge I abgelängt worden ist.

Zur optimalen Ausnutzung der Länge des Profils 12 fährt gemäß Figur 18 das Hohlwellendrehfutter 20₂, in dem das Profil 12 minimal eingespannt ist, wieder in Richtung des Laserwerkzeugs 17 bis das in Bewegungsrichtung x vor dem Laserwerkzeug 17 eine letzte Fixlänge I ansteht.

Dann öffnet das Hohlwellendrehfutter 20₂ und fährt entgegen der Bewegungsrichtung x aus dem Bereich der Laserschneideinrichtung 16 heraus (siehe Figur 19).

Nun kann der Laser 17 einen letzten Schnitt zur Erstellung einer Fixlänge 18 tätigen, wobei das nicht dargestellte Reststück minimiert wurde (siehe Figur 20).

Während der Verfahrensschritte 19 bis 21 kann dann auf nicht dargestellte Weise parallel dazu das Hohlwellendrehfutter 201 geöffnet und das neue Profil 12 endseitig überfahren werden(siehe Figur 20).

Letztlich kann dann das Hohlwellendrehfutter 201 im geschlossenen Zustand das neue Profil 12 durch das geöffnete Hohlwellendrehfutter 202 hindurch in Richtung des Laserwerkzeugs 17 schieben.

Damit ist wieder die Ausgangssituation gemäß Figur 6 erreicht.

### Bezugszeichenliste

- 10: Vorrichtung
- 11: Profillager
- 12: Profil
- 13: Schrägförderrampe
- 14: Positioniereinrichtung
- 15: Zuführeinrichtung
- 16: Laserschneideinrichtung
- 17: Laserwerkzeug
- 18: Fixlängen
- 19: Führungsbauteil
- 20₁, 20₂, 20₃: Hohlwellendrehfutter

- a: Mittelachse
- x: Bewegungsrichtung
- I: Länge von 18
- A: Aufnahmebehälter für 18

## Patentansprüche

1. Vorrichtung (10) zur Herstellung von Werkstücken, nachfolgend Fixlängen (18) genannt, aus langen Profilen (12), mit einer Zuführeinrichtung (15) und mindestens einem Drehfutter sowie wenigstens einem Laserwerkzeug, **dadurch gekennzeichnet, dass** die Zuführeinrichtung (15) in Bewegungsrichtung vor dem Laserwerkzeug (17) mindestens zwei Hohlwellendrehfutter (20₁, 20₂) aufweist, deren dauerhafte Drehbewegungen synchronisiert sind.

2. Vorrichtung (10) nach Anspruch 1, **dadurch gekennzeichnet, dass** die Zuführeinrichtung (15) bei größeren Fixlängen (18) ein zusätzliches Hohlwellendrehfutter (20₃) in Bewegungsrichtung nach dem Laserwerkzeug (17) aufweist.

3. Verfahren zur Herstellung von Fixlängen aus langen Profilen mit einer Zuführeinrichtung, die in Bewegungsrichtung vor dem Laserwerkzeug zwei Hohlwellendrehfutter aufweist, deren dauerhafte Drehbewegungen synchronisiert sind, **gekennzeichnet durch** folgende Verfahrensschritte:
a. Das geöffnete Hohlwellendrehfutter (20₁) bewegt sich entgegen der Bewegungsrichtung zu einem langen Profil, überfährt dieses lediglich endseitig und schließt.
b. Das geschlossene Hohlwellendrehfutter (20₁) bewegt das Profil durch das geöffnete Hohlwellendrehfutter (20₂) hindurch bis unter das Laserwerkzeug
c. Hohlwellendrehfutter (20₂) schließt und ein erster Laserschnitt zur Erstellung einer Fixlänge beginnt
d. Hohlwellendrehfutter (20₁) öffnet sich und überfährt entgegen der Bewegungsrichtung weiter das Profil
e. Transport des Profils um eine Fixlänge Richtung Laserwerkzeug bei geöffneten Hohlwellendrehfutter (20₂) und geschlossenem Hohlwellendrehfutter 1
f. Durchführung eines weiteren Schnittes zur Herstellung einer Fixlänge
g. Mehrfache Wiederholung der Verfahrensschritte d. bis f. bis das die Restlänge des Werkstücks kleiner ist als die Fixlänge
h. Hohlwellendrehfutter (20₁) bewegt sich entgegen der Bewegungsrichtung zu einem weiteren langen Profil, überfährt dieses endseitig und schließt.

4. Verfahren zur Herstellung von Fixlängen aus langen Profilen mit einer Zuführeinrichtung, die in Bewegungsrichtung vor dem Laserwerkzeug mindestens zwei und hinter dem Laserwerkzeug ein Hohlwellendrehfutter aufweist, deren dauerhaften Drehbewegungen synchronisiert sind, **gekennzeichnet durch** folgende Verfahrensschritte:
a. Das geöffnete Hohlwellendrehfutter (20₁) bewegt sich entgegen der Bewegungsrichtung zu einem langen Profil, überfährt dieses lediglich endseitig und schließt.
b. Das geschlossene Hohlwellendrehfutter (20₁) bewegt das Profil durch das geöffnete Hohlwellendrehfutter (20₂) hindurch bis unter das Laserwerkzeug
c. Hohlwellendrehfutter (20₂) schließt und ein erster Laserschnitt zur Erstellung einer Fixlänge beginnt
d. Hohlwellendrehfutter (20₁) öffnet sich und überfährt entgegen der Bewegungsrichtung weiter das Profil
e. Transport des Profils um eine Fixlänge Richtung Laserwerkzeug bei geöffneten Hohlwellendrehfutter (20₂) und geschlossenem Hohlwellendrehfutter (20₁)
f. Durchführung eines weiteren Schnittes zur Herstellung der Fixlänge
g. Mehrfache Wiederholung der Verfahrensschritte d. bis f.
h. Geschlossenes Hohlwellendrehfutter (20₁) transportiert die Restlänge des Profils in Bewegungsrichtung durch das geöffnete Hohlwellendrehfutter (20₂) hindurch über den Standort des Laserwerkzeugs hinaus bis die Restlänge in das geöffnete Hohlwellendrehfutter (20₃) ragt
i. Hohlwellendrehfutter schließt und zieht die Restlänge durch das geöffnete Hohlwellendrehfutter (20₂) hindurch um eine Fixlänge in Bewegungsrichtung, bis dass das geöffnete Hohlwellendrehfutter (20₁) frei wird
j. Das geöffnete Hohlwellendrehfutter (20₁) bewegt sich entgegen der Bewegungsrichtung zu einem weiteren langen Profil, überfährt dieses lediglich endseitig und schließt.
